# EUROPEAN PATENT APPLICATION

(11) **EP 3 048 826 A1**
(43) Date of publication of application: **27.07.2016**
(21) Application number: 13895135.5
(22) Date of filing: 09.10.2013
(51) Int. Cl.: H04W 8/08

(54) **METHOD AND APPARATUS FOR INFORMATION TRANSMISSION**

(71) Applicant: Huawei Technologies Co., Ltd., Longgang District Shenzhen, Guangdong 518129 (CN)
(72) Inventor: QUAN, Wei, Shenzhen Guangdong 518129 (CN); HU, Zhenxing, Shenzhen Guangdong 518129 (CN); YANG, Xiaodong, Shenzhen Guangdong 518129 (CN); ZHANG, Jian, Shenzhen Guangdong 518129 (CN)
(74) Representative: Pfenning, Meinig & Partner mbB
(86) International application number: PCT/CN2013/084895
(87) International publication number: WO 2015/051507

(57) **Abstract**

Embodiments of the present invention provide an information transmission method and an apparatus, where the method includes: receiving, by a base station, first indication information sent by first user equipment UE, where the first indication information is used to indicate baseband processing bandwidth of the first UE, and the baseband processing bandwidth of the first UE is less than or equal to preset bandwidth; determining, by the base station, the baseband processing bandwidth of the first UE according to the first indication information; and sending, by the base station, first information to the first UE according to the baseband processing bandwidth of the first UE, where the first information is information sent by the base station to the first UE through a physical downlink shared channel PDSCH, and bandwidth occupied by a physical resource of the first information is less than or equal to the baseband processing bandwidth of the first UE. Therefore, UE can completely decode the PDSCH and acquire information sent by the base station, thereby ensuring a capability of the UE to receive data.

## Description

### TECHNICAL FIELD

Embodiments of the present invention relate to the field of communications technologies, and in particular, to an information transmission method and an apparatus.

### BACKGROUND

In a Long Term Evolution (Long Term Evolution, LTE for short) system and an LTE Advanced (LTE Advanced, LTE-A for short) system, a base station uses scheduling signaling transmitted on a physical downlink control channel (Physical Downlink Control Channel, PDCCH for short) or a demodulated enhanced physical downlink control channel (Enhance Physical Downlink Control Channel, EPDCCH for short) to schedule uplink and downlink information, where scheduling information includes: a physical resource block (Physical Resource Block, PRB for short) used when user equipment (User Equipment, UE for short) receives downlink information on a physical downlink shared channel (Physical Downlink Shared Channel, PDSCH for short) or sends uplink information on a physical uplink shared channel (Physical Uplink Shared Channel, PUSCH for short), a modulation and coding scheme (Modulation and Coding Scheme, MCS for short) used for information transmission, a redundancy version (Redundancy Version, RV for short) used for information transmission, and the like. The PDCCH occupies all bandwidth of the LTE system. The EPDCCH, the PDSCH, and the PUSCH occupy a part of or all of the bandwidth of the LTE system. Generally, bandwidth of the LTE system may be 1.4 MHz, 5 MHz, 10 MHz, 20 MHz, or the like. At present, to reduce costs of a machine type communication (Machine Type Communication, MTC for short) device (for example, an electricity meter, or a water meter), an information processing capability of the machine type communication device needs to be limited, and this type of communication device may be referred to as low cost (Low Cost) MTC UE. Therefore, generally, bandwidth of a PDSCH processed by this type of UE can reach only 1.4 MHz.

However, because the bandwidth of the PDSCH processed by this type of UE is relatively narrow, a capability of the UE to receive information from the base station is affected.

### SUMMARY

According to an information transmission method and an apparatus provided in embodiments of the present invention, UE can completely decode a PDSCH and acquire information sent by a base station, thereby improving a capability of the UE to receive data.

According to a first aspect, an embodiment of the present invention provides an information transmission method, including: receiving, by a base station, first indication information sent by first user equipment UE, where the first indication information is used to indicate baseband processing bandwidth of the first UE, and the baseband processing bandwidth of the first UE is less than or equal to preset bandwidth;
determining, by the base station, the baseband processing bandwidth of the first UE according to the first indication information; and
sending, by the base station, first information to the first UE according to the baseband processing bandwidth of the first UE, where the first information is information sent by the base station to the first UE through a physical downlink shared channel PDSCH, and bandwidth occupied by a physical resource of the first information is less than or equal to the baseband processing bandwidth of the first UE.

In a first possible implementation manner of the first aspect, the receiving, by a base station, first indication information sent by first user equipment UE includes:
receiving, by the base station on a first physical random access channel PRACH resource, the first preamble sent by the first UE, where the first PRACH resource and/or the first preamble are/is used to indicate the baseband processing bandwidth of the first UE; and
the determining, by the base station, the baseband processing bandwidth of the first UE according to the indication information includes:
   determining, by the base station, the baseband processing bandwidth of the first UE according to the first PRACH resource and/or the first preamble.

With reference to the first possible implementation manner of the first aspect, in a second possible implementation manner of the first aspect, before the receiving, by the base station on a first physical random access channel PRACH resource, the first preamble sent by the first UE, the method further includes:
sending, by the base station, a first random access parameter to at least one UE, where the at least one UE includes the first UE, the first random access parameter includes second indication information, a configuration condition of a PRACH resource and/or a configuration condition of a preamble set, the second indication information is used to instruct the first UE to acquire the configuration condition of the PRACH resource and/or the configuration condition of the preamble set in the first random access parameter, and the preamble set includes at least one preamble; and
the determining, by the base station, the baseband processing bandwidth of the first UE according to the first PRACH resource includes:
   determining, by the base station, the baseband processing bandwidth of the first UE according to a situation in which the first PRACH resource meets the configuration condition of the PRACH resource in the first random access parameter; and
   the determining, by the base station, the baseband processing bandwidth of the first UE according to the first preamble includes:
      determining, by the base station, the baseband processing bandwidth of the first UE according to a situation in which the first preamble meets the configuration condition of the preamble set in the first random access parameter.

With reference to the second possible implementation manner of the first aspect, in a third possible implementation manner of the first aspect, the configuration condition of the preamble set is a quantity of preambles and/or a preamble identifier of the preamble set.

With reference to the second possible implementation manner of the first aspect, in a fourth possible implementation manner of the first aspect, the configuration condition of the PRACH resource includes a location of a time-frequency resource of the PRACH resource, a location of a time-domain resource of the PRACH resource, or a location of a frequency-domain resource of the PRACH resource.

In a fifth possible implementation manner of the first aspect, the receiving, by a base station, first indication information sent by first user equipment UE includes:
receiving, by the base station, a message 3 sent by the first UE, where the message 3 includes the first indication information.

With reference to the fifth possible implementation manner of the first aspect, in a sixth possible implementation manner of the first aspect, the first indication information is a Radio Resource Control RRC connection setup request reason, and the RRC connection setup request reason is used to indicate the baseband processing bandwidth of the first UE.

With reference to the fifth possible implementation manner of the first aspect, in a seventh possible implementation manner of the first aspect, the first indication information is a Media Access Control MAC layer protocol data unit PDU header in the message 3, and the MAC layer PDU header is used to indicate the baseband processing bandwidth of the first UE.

With reference to the seventh possible implementation manner of the first aspect, in an eighth possible implementation manner of the first aspect, the MAC layer PDU header includes a preset bit indicator, and the preset bit indicator is used to indicate the baseband processing bandwidth of the first UE.

With reference to the fifth possible implementation manner of the first aspect, in a ninth possible implementation manner of the first aspect, the first indication information is a preset Media Access Control MAC control element CE in the message 3, and the MAC CE is used to indicate the baseband processing bandwidth of the first UE.

With reference to the ninth possible implementation manner of the first aspect, in a tenth possible implementation manner of the first aspect, the MAC CE includes a preset logic channel identifier LCID, and the preset LCID is used to indicate the baseband processing bandwidth of the first UE.

According to a second aspect, an embodiment of the present invention further provides an information transmission method, including: sending, by user equipment UE, first indication information to the base station, where the first indication information is used to indicate baseband processing bandwidth of the UE, and the baseband processing bandwidth of the UE is less than or equal to preset bandwidth; and
receiving, by the UE, first information that is sent by the base station according to the baseband processing bandwidth of the UE, where the first information is information sent by the base station through a physical downlink shared channel PDSCH, and bandwidth occupied by a physical resource of the first information is less than or equal to the baseband processing bandwidth of the UE.

In a first possible implementation manner of the second aspect, the sending, by user equipment UE, first indication information to the base station includes:
sending, by the UE on a first physical random access channel PRACH resource, a first preamble to the base station, where the first PRACH resource and/or the first preamble are/is used to indicate the baseband processing bandwidth of the UE.

With reference to the first possible implementation manner of the second aspect, in a second possible implementation manner of the second aspect, before the sending, by user equipment UE, first indication information to the base station, the method further includes:
receiving, by the UE, a first random access parameter sent by the base station, where the first random access parameter includes second indication information, a configuration condition of a PRACH resource and/or a configuration condition of a preamble set, the second indication information is used to instruct the first UE to acquire the configuration condition of the PRACH resource and/or the configuration condition of the preamble set in the first random access parameter, and the preamble set includes at least one preamble; and
acquiring, by the UE, the configuration condition of the PRACH resource and/or the configuration condition of the preamble set in the first random access parameter; and
before the sending, by the UE on a first physical random access channel PRACH resource, a first preamble to the base station, the method further includes:
   determining, by the UE, the first PRACH resource and the first preamble according to the first random access parameter, where the first PRACH resource meets the configuration condition of the PRACH resource in the first random access parameter; and the first preamble meets the configuration condition of the preamble set in the first random access parameter.

With reference to the second possible implementation manner of the second aspect, in a third possible implementation manner of the second aspect, the configuration condition of the preamble set is a quantity of preambles and/or a preamble set identifier of the preamble set.

With reference to the second possible implementation manner of the second aspect, in a fourth possible implementation manner of the second aspect, the configuration condition of the PRACH resource includes a location of a time-frequency resource of the PRACH resource, a location of a time-domain resource of the PRACH resource, or a location of a frequency-domain resource of the PRACH resource.

In a fifth possible implementation manner of the second aspect, the sending, by user equipment UE, first indication information to the base station includes:
sending, by the UE, a message 3 to the base station, where the message 3 includes the first indication information.

With reference to the fifth possible implementation manner of the second aspect, in a sixth possible implementation manner of the second aspect, the first indication information is a Radio Resource Control RRC connection setup request reason, and the RRC connection setup request reason is used to indicate the baseband processing bandwidth of the UE.

With reference to the fifth possible implementation manner of the second aspect, in a seventh possible implementation manner of the second aspect, the first indication information is a Media Access Control MAC layer protocol data unit PDU header in the message 3, and the MAC layer PDU header is used to indicate the baseband processing bandwidth of the UE.

With reference to the seventh possible implementation manner of the second aspect, in an eighth possible implementation manner of the second aspect, the MAC layer PDU header includes a preset bit indicator, and the preset bit indicator is used to indicate the baseband processing bandwidth of the UE.

With reference to the fifth possible implementation manner of the second aspect, in a ninth possible implementation manner of the second aspect, the first indication information is a preset Media Access Control MAC control element CE in the message 3, and the MAC CE is used to indicate the baseband processing bandwidth of the UE.

With reference to the ninth possible implementation manner of the second aspect, in a tenth possible implementation manner of the second aspect, the MAC CE includes a preset logic channel identifier, and the preset logic channel identifier is used to indicate the baseband processing bandwidth of the UE.

According to a third aspect, an embodiment of the present invention further provides an information transmission method, further including: determining, by user equipment UE, whether bandwidth occupied by a physical resource of first information sent by a base station is greater than baseband processing bandwidth of the UE, where the first information is information sent by the base station through a physical downlink shared channel PDSCH; and
if yes, stopping receiving, by the UE, the first information sent by the base station.

In a first possible implementation manner of the third aspect, before the determining, by user equipment UE, whether bandwidth occupied by a physical resource of first information sent by a base station is greater than baseband processing bandwidth of the UE, the method further includes:
receiving, by the UE, downlink control information DCI sent by the base station, where the DCI is used to schedule the physical resource of the first information; and
determining, by the UE according to the DCI, bandwidth occupied by a physical resource of the first signal.

With reference to the third aspect or the first possible implementation manner of the third aspect, in a second possible implementation manner of the third aspect, the stopping receiving, by the UE, the first information sent by the base station includes:
if the UE has received a first part of the first information, discarding, by the UE, the first part of the first information; and
stopping receiving, by the UE, a second part of the first information except the first part of the first information.

According to a fourth aspect, an embodiment of the present invention provides a base station, including: a receiving unit, configured to receive first indication information sent by first user equipment UE, where the first indication information is used to indicate baseband processing bandwidth of the first UE, and the baseband processing bandwidth of the first UE is less than or equal to preset bandwidth;
a determining unit, configured to determine the baseband processing bandwidth of the first UE according to the first indication information; and
a sending unit, configured to send first information to the first UE according to the baseband processing bandwidth of the first UE, where the first information is information sent by the base station to the first UE through a physical downlink shared channel PDSCH, and bandwidth occupied by a physical resource of the first information is less than or equal to the baseband processing bandwidth of the first UE.

In a first possible implementation manner of the fourth aspect, the receiving unit is specifically configured to receive, on a first physical random access channel PRACH resource, the first preamble sent by the first UE, where the first PRACH resource and/or the first preamble are/is used to indicate the baseband processing bandwidth of the first UE; and
the determining unit is specifically configured to determine the baseband processing bandwidth of the first UE according to the first PRACH resource and/or the first preamble.

With reference to the first possible implementation manner of the fourth aspect, in a second possible implementation manner of the fourth aspect, the sending unit is further configured to: before the receiving unit receives, on the first physical random access channel PRACH resource, the first preamble sent by the first UE, send a first random access parameter to at least one UE, where the at least one UE includes the first UE, the first random access parameter includes second indication information, a configuration condition of a PRACH resource and/or a configuration condition of a preamble set, the second indication information is used to instruct the first UE to acquire the configuration condition of the PRACH resource and/or the configuration condition of the preamble set in the first random access parameter, and the preamble set includes at least one preamble; and
the determining unit is specifically configured to determine the baseband processing bandwidth of the first UE according to a situation in which the first PRACH resource meets the configuration condition of the PRACH resource in the first random access parameter; and/or determine the baseband processing bandwidth of the first UE according to a situation in which the first preamble meets the configuration condition of the preamble set in the first random access parameter.

With reference to the second possible implementation manner of the fourth aspect, in a third possible implementation manner of the fourth aspect, the configuration condition of the preamble set is a quantity of preambles and/or a preamble identifier of the preamble set.

With reference to the second possible implementation manner of the fourth aspect, in a fourth possible implementation manner of the fourth aspect, the configuration condition of the PRACH resource includes a location of a time-frequency resource of the PRACH resource, a location of a time-domain resource of the PRACH resource, or a location of a frequency-domain resource of the PRACH resource.

In a fifth possible implementation manner of the fourth aspect, the receiving unit is specifically configured to receive a message 3 sent by the first UE, where the message 3 includes the first indication information.

With reference to the fifth possible implementation manner of the fourth aspect, in a sixth possible implementation manner of the fourth aspect, the first indication information is a Radio Resource Control RRC connection setup request reason, and the RRC connection setup request reason is used to indicate the baseband processing bandwidth of the first UE.

With reference to the fifth possible implementation manner of the fourth aspect, in a seventh possible implementation manner of the fourth aspect, the first indication information is a Media Access Control MAC layer protocol data unit PDU header in the message 3, and the MAC layer PDU header is used to indicate the baseband processing bandwidth of the first UE.

With reference to the seventh possible implementation manner of the fourth aspect, in an eighth possible implementation manner of the fourth aspect, the MAC layer PDU header includes a preset bit indicator, and the preset bit indicator is used to indicate the baseband processing bandwidth of the first UE.

With reference to the fifth possible implementation manner of the fourth aspect, in a ninth possible implementation manner of the fourth aspect, the first indication information is a preset Media Access Control MAC control element CE in the message 3, and the MAC CE is used to indicate the baseband processing bandwidth of the first UE.

With reference to the ninth possible implementation manner of the fourth aspect, in a tenth possible implementation manner of the fourth aspect, the MAC CE includes a preset logic channel identifier LCID, and the preset LCID is used to indicate the baseband processing bandwidth of the first UE.

According to a fifth aspect, an embodiment of the present invention provides UE, including: a sending unit, configured to send first indication information to the base station, where the first indication information is used to indicate baseband processing bandwidth of the UE, and the baseband processing bandwidth of the UE is less than or equal to preset bandwidth; and
a receiving unit, configured to receive first information that is sent by the base station according to the baseband processing bandwidth of the UE, where the first information is information sent by the base station through a physical downlink shared channel PDSCH, and bandwidth occupied by a physical resource of the first information is less than or equal to the baseband processing bandwidth of the UE.

In a first possible implementation manner of the fifth aspect, the sending unit is specifically configured to send, on a first physical random access channel PRACH resource, a first preamble to the base station, where the first PRACH resource and/or the first preamble are/is used to indicate the baseband processing bandwidth of the UE.

With reference to the first possible implementation manner of the fifth aspect, in a second possible implementation manner of the fifth aspect, the UE further includes: an acquiring unit and a determining unit; where
the receiving unit is further configured to: before the sending unit sends the first indication information to the base station, receive a first random access parameter sent by the base station, where the first random access parameter includes second indication information, a configuration condition of a PRACH resource and/or a configuration condition of a preamble set, the second indication information is used to instruct the first UE to acquire the configuration condition of the PRACH resource and/or the configuration condition of the preamble set in the first random access parameter, and the preamble set includes at least one preamble;
the acquiring unit is configured to acquire the configuration condition of the PRACH resource and/or the configuration condition of the preamble set in the first random access parameter; and
the determining unit is configured to: before the sending unit sends, on the first physical random access channel PRACH resource, the first preamble to the base station, determine the first PRACH resource and the first preamble according to the first random access parameter, where the first PRACH resource meets the configuration condition of the PRACH resource in the first random access parameter, and the first preamble meets the configuration condition of the preamble set in the first random access parameter.

With reference to the second possible implementation manner of the fifth aspect, in a third possible implementation manner of the fifth aspect, the configuration condition of the preamble set is a quantity of preambles and/or a preamble set identifier of the preamble set.

With reference to the second possible implementation manner of the fifth aspect, in a fourth possible implementation manner of the fifth aspect, the configuration condition of the PRACH resource includes a location of a time-frequency resource of the PRACH resource, a location of a time-domain resource of the PRACH resource, or a location of a frequency-domain resource of the PRACH resource.

In a fifth possible implementation manner of the fifth aspect, the sending unit is specifically configured to send a message 3 to the first base station, where the message 3 includes the first indication information.

With reference to the fifth possible implementation manner of the fifth aspect, in a sixth possible implementation manner of the fifth aspect, the first indication information is a Radio Resource Control RRC connection setup request reason, and the RRC connection setup request reason is used to indicate the baseband processing bandwidth of the UE.

With reference to the fifth possible implementation manner of the fifth aspect, in a seventh possible implementation manner of the fifth aspect, the first indication information is a Media Access Control MAC layer protocol data unit PDU header in the message 3, and the MAC layer PDU header is used to indicate the baseband processing bandwidth of the UE.

With reference to the seventh possible implementation manner of the fifth aspect, in an eighth possible implementation manner of the fifth aspect, the MAC layer PDU header includes a preset bit indicator, and the preset bit indicator is used to indicate the baseband processing bandwidth of the UE.

With reference to the fifth possible implementation manner of the fifth aspect, in a ninth possible implementation manner of the fifth aspect, the first indication information is a preset Media Access Control MAC control element CE in the message 3, and the MAC CE is used to indicate the baseband processing bandwidth of the UE.

With reference to the ninth possible implementation manner of the fifth aspect, in a tenth possible implementation manner of the fifth aspect, the MAC CE includes a preset logic channel identifier, and the preset logic channel identifier is used to indicate the baseband processing bandwidth of the UE.

According to a sixth aspect, an embodiment of the present invention provides UE, including: a judging unit, configured to determine whether bandwidth occupied by a physical resource of first information sent by a base station is greater than baseband processing bandwidth of the UE, where the first information is information sent by the base station through a physical downlink shared channel PDSCH; and
a processing unit, configured to: if the judging unit determines that the bandwidth occupied by the physical resource of the first information sent by the base station is greater than the baseband processing bandwidth of the UE, stop receiving the first information sent by the base station.

In a first possible implementation manner of the sixth aspect, the UE further includes:
a receiving unit, configured to: before the judging unit determines whether the bandwidth occupied by the physical resource of the first information sent by the base station is greater than the baseband processing bandwidth of the UE, receive downlink control information DCI sent by the base station, where the DCI is used to schedule the physical resource of the first information; and
a determining unit, configured to determine bandwidth occupied by a physical resource of the first signal according to the DCI.

With reference to the sixth aspect or the first possible implementation manner of the sixth aspect, in a second possible implementation manner of the sixth aspect, the processing unit is specifically configured to: if the UE has received a first part of the first information, discard the first part of the first information; and stop receiving a second part of the first information except the first part of the first information.

According to the information transmission method and the apparatus provided in the embodiments of the present invention, a base station receives first indication information sent by first UE, determines baseband processing bandwidth of the first UE according to the first indication information, and sends first information to the first UE according to the baseband processing bandwidth of the first UE, where bandwidth occupied by a physical resource of the first information is not greater than the baseband processing bandwidth of the first UE. Therefore, UE can completely decode a PDSCH and acquire information sent by a base station, thereby improving a capability of the UE to receive data.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of an information transmission method according to the present invention;
FIG. 2 is a flowchart of Embodiment 2 of an information transmission method according to the present invention;
FIG. 3 is a flowchart of Embodiment 3 of an information transmission method according to the present invention;
FIG. 4 is a first schematic diagram of a location of a time-frequency resource of a PRACH resource used by first UE and second UE according to an embodiment of the present invention;
FIG. 5 is a second schematic diagram of a location of a time-frequency resource of a PRACH resource used by first UE and second UE according to an embodiment of the present invention;
FIG. 6 is a flowchart of Embodiment 4 of an information transmission method according to the present invention;
FIG. 7 is a flowchart of Embodiment 5 of an information transmission method according to the present invention;
FIG. 8 is a schematic structural diagram of Embodiment 1 of a base station according to the present invention;
FIG. 9 is a schematic structural diagram of Embodiment 3 of a base station according to the present invention;
FIG. 10 is a schematic structural diagram of Embodiment 1 of UE according to the present invention;
FIG. 11 is a schematic structural diagram of Embodiment 2 of UE according to the present invention;
FIG. 12 is a schematic structural diagram of Embodiment 3 of UE according to the present invention;
FIG. 13 is a schematic structural diagram of Embodiment 4 of UE according to the present invention;
FIG. 14 is a schematic structural diagram of Embodiment 5 of UE according to the present invention; and
FIG. 15 is a schematic structural diagram of Embodiment 6 of UE according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

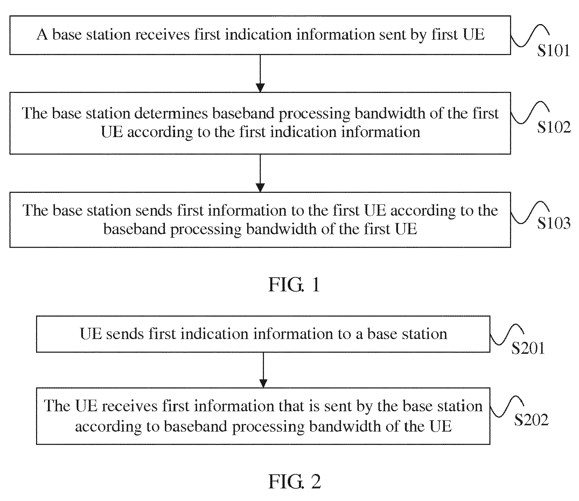

FIG. 1 is a flowchart of Embodiment 1 of an information transmission method according to the present invention. As shown in FIG. 1, the method in this embodiment may include the following steps:
S101. Abase station receives first indication information sent by first UE.

In this embodiment, the base station may receive the first indication information sent by the first UE, where the first indication information is used to indicate baseband processing bandwidth of the first UE, and the baseband processing bandwidth of the first UE is less than or equal to preset bandwidth. For example, the baseband processing bandwidth of the first UE may be 1.4 MHz. The preset bandwidth may be 1.4 MHz, which is not limited in this embodiment. The first UE may be low cost MTC UE. Specifically, for example, the baseband processing bandwidth may be baseband processing bandwidth of a downlink data channel.

S102. The base station determines baseband processing bandwidth of the first UE according to the first indication information.

The base station can determine the baseband processing bandwidth of the first UE according to the first indication information, that is, the base station determines that the baseband processing bandwidth of the first UE is not greater than the preset bandwidth.

S103. The base station sends first information to the first UE according to the baseband processing bandwidth of the first UE.

In this embodiment, after determining the baseband processing bandwidth of the first UE, the base station may send the first information to the first UE according to the baseband processing bandwidth of the first UE, where the first information is information sent by the base station to the first UE through a PDSCH, such as data, a random access response (Random Access Response, RAR for short), or another signaling. To ensure that after receiving a PDSCH signal, the first UE can perform decoding to acquire the first information sent through the PDSCH, bandwidth occupied by a physical resource of the first information is not greater than the baseband processing bandwidth of the first UE, that is, the bandwidth occupied by the physical resource of the first information is less than the baseband processing bandwidth of the first UE, or equal to the baseband processing bandwidth of the first UE, so that the first UE can receive a first signal by using the PDSCH signal. Because bandwidth occupied by a physical resource of the first signal is less than or equal to the baseband processing bandwidth of the first UE, the first UE can completely decode the PDSCH and acquire the first signal, thereby ensuring a capability of UE to acquire information from the base station.

According to the information transmission method provided in Embodiment 1 of the present invention, a base station receives first indication information sent by first UE, determines baseband processing bandwidth of the first UE according to the first indication information, and sends first information to the first UE according to the baseband processing bandwidth of the first UE, where bandwidth occupied by a physical resource of the first information is not greater than the baseband processing bandwidth of the first UE. Therefore, UE can completely decode a PDSCH and acquire information sent by a base station, thereby improving a capability of the UE to receive data.

FIG. 2 is a flowchart of Embodiment 2 of an information transmission method according to the present invention. As shown in FIG. 2, the method in this embodiment may include the following steps:
S201: UE sends first indication information to a base station.

In this embodiment, the UE may send the first indication information to the base station, where the first indication information is used to indicate baseband processing bandwidth of the UE, so as to notify the base station of the baseband processing bandwidth of the UE, where the baseband processing bandwidth of the UE is less than or equal to preset bandwidth.

S202. The UE receives first information that is sent by the base station according to baseband processing bandwidth of the UE.

In this embodiment, the base station receives the first indication information of the UE, determines the baseband processing bandwidth of the UE according to the first indication information. The base station may send, according to the baseband processing bandwidth of the UE, the first information to the UE through a PDSCH, where the first information is information sent by the base station through the PDSCH, such as data, a RAR, or another signaling, and bandwidth occupied by a physical resource of the first information is less than or equal to the baseband processing bandwidth of the UE. Therefore, after receiving the first information sent by the base station, the UE can completely decode the PDSCH and acquire the first information, thereby ensuring a capability of the UE to acquire information from the base station.

According to the data transmission method provided in Embodiment 2 of the present invention, UE sends first indication information to a base station, and receives first information that is sent by the base station according to baseband processing bandwidth of the UE, where bandwidth occupied by a physical resource of the first information is less than or equal to the baseband processing bandwidth of the UE. Therefore, the UE can completely decode a PDSCH and acquire information sent by the base station, thereby ensuring a capability of the UE to receive data.

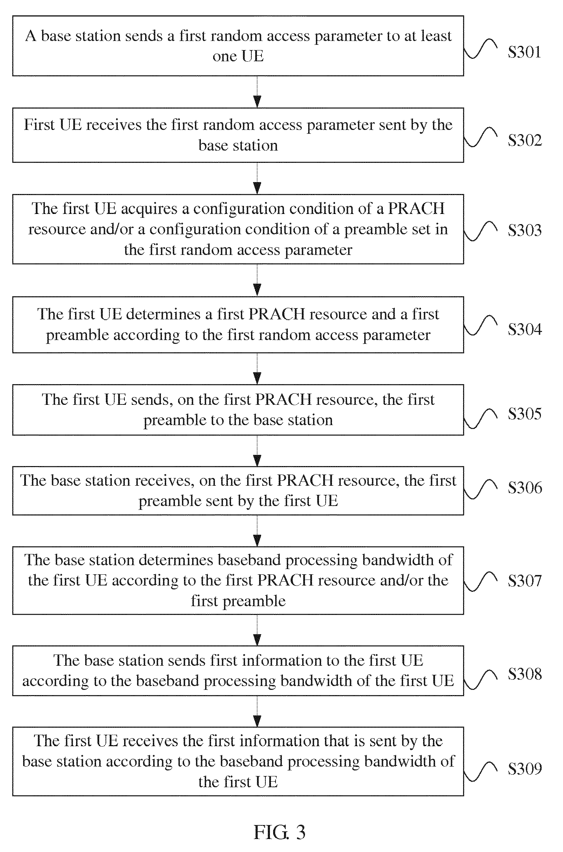

FIG. 3 is a flowchart of Embodiment 3 of an information transmission method according to the present invention. As shown in FIG. 3, the method in this embodiment may include the following steps:
S301. A base station sends a first random access parameter to at least one UE.

In this embodiment, the base station may send the first random access parameter to the at least one UE, where the at least one UE includes first UE and baseband processing bandwidth of the first UE is not greater than preset bandwidth. The first random access parameter includes second indication information, where the second indication information is used to instruct the first UE to acquire a configuration condition of a physical random access channel (Physical Random Access Channel, PRACH for short) resource and/or a configuration condition of a preamble set in the first random access parameter, and the preamble set includes at least one preamble. That the base station sends the first random access parameter to at least one UE is executed before the UE performs a random access process. A message used when the base station sends the first random access parameter to the at least one UE may be a system broadcast message, a Radio Resource Control (Radio Resource Control, RRC for short) message, or another message, which is not limited in this embodiment of the present invention. Optionally, the at least one UE determines, according to the second indication information, whether to acquire the configuration condition of the PRACH resource and/or the configuration condition of the preamble set. If the baseband processing bandwidth of UE is greater than the preset bandwidth, the UE stops acquiring the configuration condition of the PRACH resource and/or the configuration condition of the preamble set.

Optionally, the configuration condition of the preamble set may be a quantity of preambles, where the quantity of preambles is a quantity of available preambles of the first UE. A preamble identifier is indicated by the quantity of preambles. For example, if a total quantity of available preambles of a cell is 64, a quantity of preambles of a Group A is 20, a quantity of preambles of a Group B is 10, and a quantity of preambles in the first random access parameter is 15, a preamble identifier indicated in the first random access parameter is (64 - 20 - 10) = 34 to (34 + 15 - 1) = 48, that is, a preamble set indicated in the first random access parameter is a set of preambles indicated by preamble identifiers 34-48.

Optionally, the configuration condition of the preamble set may be the preamble identifier. In this embodiment, the baseband processing bandwidth of the first UE may be determined by using a preamble corresponding to the preamble identifier. For example, the first random access parameter includes preamble identifiers 34-48.

Optionally, the configuration condition of the preamble set may be a preamble set identifier, where the preamble set identifier may be an identifier of the Group (Group) A, an identifier of the Group B, or an identifier of a Group C. The Group A is a Group A formed by preambles in the prior art, the Group B is a Group B formed by preambles in the prior art, and the Group C is a preamble set in the prior art except the Group A and the Group B. Details are not described again in this embodiment of the present invention. In this embodiment, the baseband processing bandwidth of the first UE may be determined by using a preamble in the Group A or the Group B.

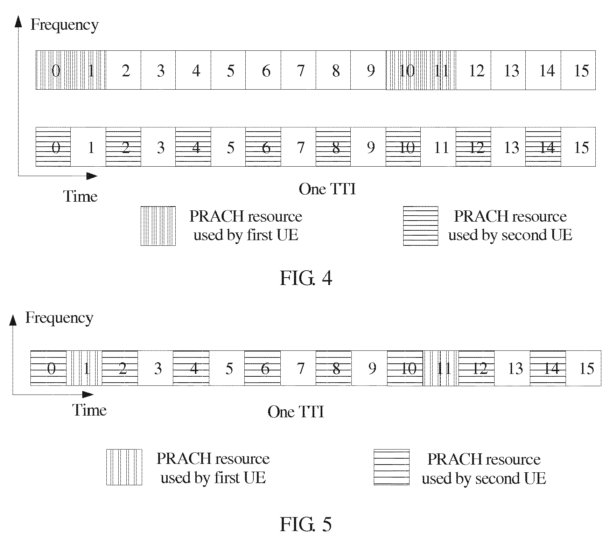

In a first feasible implementation manner, the configuration condition of the PRACH resource includes a location of a frequency-domain resource of the PRACH resource. If a time-domain resource of the PRACH resource used by the first UE is the same as a time-domain resource of the PRACH resource used by second UE, and baseband processing bandwidth of the second UE is greater than the foregoing preset bandwidth, that is, the second UE is ordinary UE in the prior art, the base station may send the time-domain resource of the PRACH resource used by the first UE to the first UE by using the random access parameter in the prior art, and the location of the frequency-domain resource of the PRACH resource may be sent to the first UE by using the first random access parameter. FIG. 4 is a first schematic diagram of a location of a time-frequency resource of a PRACH resource used by first UE and second UE according to an embodiment of the present invention. As shown in FIG. 4, a location of a time-frequency resource shown in FIG. 5 is a location of a time-frequency resource in a transmission time interval (Transmission Time Interval, TTI for short). In this embodiment, the baseband processing bandwidth of the first UE may be determined by using the location of the frequency-domain resource of the PRACH resource.

In a second feasible implementation manner, the configuration condition of the PRACH resource includes a location of a time-domain resource of the PRACH resource. If a frequency-domain resource of the PRACH resource used by the first UE is the same as a frequency-domain resource of the PRACH resource used by the second UE, and the baseband processing bandwidth of the second UE is greater than the foregoing preset bandwidth, that is, the second UE is ordinary UE in the prior art, the base station may send the frequency-domain resource of the PRACH resource used by the first UE to the first UE by using the random access parameter in the prior art, and the location of the time-domain resource of the PRACH resource may be sent to the first UE by using the first random access parameter. For example, it indicates a subframe in which the PRACH resource may be configured, and the PRACH resource may be configured in an odd-numbered subframe of each frame, or the PRACH resource may be configured in subframe 0 and subframe 5 of each frame. FIG. 5 is a second schematic diagram of a location of a time-frequency resource of a PRACH resource used by first UE and second UE according to an embodiment of the present invention. As shown in FIG. 5, a location of a time-frequency resource shown in FIG. 5 is a location of a time-frequency resource in a TTI. In this embodiment, the baseband processing bandwidth of the first UE may be determined by using the location of the time-domain resource of the PRACH resource.

In a third feasible implementation manner, the configuration condition of the PRACH resource includes a location of a time-frequency resource of the PRACH resource. If a time-frequency resource of the PRACH resource used by the first UE is different from a time-frequency resource of the PRACH resource used by the second UE, and the baseband processing bandwidth of the second UE is greater than the foregoing preset bandwidth, that is, the second UE is ordinary UE in the prior art, the base station may send the time-frequency resource of the PRACH resource used by the first UE to the first UE by using the first random access parameter. In this embodiment, the baseband processing bandwidth of the first UE may be determined by using the location of the time-frequency resource of the PRACH resource.

In a fourth feasible implementation manner, if a time-frequency resource of the PRACH resource used by the first UE is the same as a time-frequency resource of the PRACH resource used by the second UE, and the baseband processing bandwidth of the second UE is greater than the foregoing preset bandwidth, that is, the second UE is ordinary UE in the prior art, the base station may send the time-frequency resource of the PRACH resource used by the first UE to the first UE by using the random access parameter in the prior art, so that the location of the time-frequency resource of the PRACH resource used by the first UE does not need to be notified separately by using the first random access parameter. In this embodiment, the baseband processing bandwidth of the first UE may be determined by using the preamble.

It may be understood that a form of specific information notified by using the foregoing first random access parameter constitutes no limitation on this embodiment of the present invention. Essence that the first random access parameter indicates the form of the specific information is using the first random access parameter to notify the first UE of an available PRACH resource and/or preamble set information.

S302. First UE receives the first random access parameter sent by the base station.

S303. The first UE acquires a configuration condition of a PRACH resource and/or a configuration condition of a preamble set in the first random access parameter.

In this embodiment, the first UE receives the first random access parameter sent by the base station, determines, according to the second indication information in the first random access parameter, to acquire the configuration condition of the PRACH resource and/or the configuration condition of the preamble set in the first random access parameter, so that the first UE can acquire the configuration condition of the PRACH resource and/or the configuration condition of the preamble set.

S304. The first UE determines a first PRACH resource and a first preamble according to the first random access parameter.

In this embodiment, after receiving the first random access parameter, the first UE executes a random access process. Specifically, the first UE determines the first PRACH resource and the first preamble according to the first random access parameter.

In a first feasible implementation manner, the first UE determines the first PRACH resource according to the configuration condition of the PRACH resource in the first random access parameter, so that the first PRACH resource meets the configuration condition of the PARCH resource in the first random access parameter. For example, a location of a frequency-domain resource of the first PRACH resource is a location of a frequency-domain resource of the PRACH resource included in the first random access parameter; a location of a time-domain resource of the first PRACH resource is a location of a time-domain resource of the PRACH resource included in the first random access parameter; or a location of a time-frequency resource of the first PRACH resource is a location of a time-frequency resource of the PRACH resource included in the first random access parameter. Optionally, the first preamble may be a preamble determined by the first UE in the prior art.

In a second feasible implementation manner, the first UE determines the first preamble according to the configuration condition of the preamble set in the first random access parameter, so that the first preamble meets the configuration condition of the preamble set in the first random access parameter. For example, the first preamble belongs to the preamble set indicated in the first random access parameter. Optionally, the first PRACH resource is a PRACH resource determined by the first UE in the prior art.

In a third feasible implementation manner, the first UE determines the first PRACH resource according to the configuration condition of the PRACH resource in the first random access parameter; and determines the first preamble according to the configuration condition of the preamble set in the first random access parameter. For example, when a PRACH resource exists in a subframe 0, a subframe 2, a subframe 4, a subframe 6, and a subframe 8, an available preamble set in the subframe 0 is a set formed by preambles respectively indicated by preamble identifiers 34-48, an available preamble set in the subframe 2 is a set formed by preambles respectively indicated by preamble identifiers 34-50, and an available preamble set in the subframe 4 is a set formed by preambles respectively indicated by preamble identifiers 34-40. Therefore, different PRACH resources may have different preamble sets.

S305. The first UE sends, on the first PRACH resource, the first preamble to the base station.

S306. The base station receives, on the first PRACH resource, the first preamble sent by the first UE.

In this embodiment, when the first UE performs a random access process, the first UE sends, on the first PRACH resource, the first preamble to the base station. Correspondingly, the base station receives, on the first PRACH resource, the first preamble sent by the first UE.

S307. The base station determines baseband processing bandwidth of the first UE according to the first PRACH resource and/or the first preamble.

In this embodiment, the base station may determine the baseband processing bandwidth of the first UE according to the first PRACH resource and/or the first preamble.

In a first feasible implementation manner, the base station may determine the baseband processing bandwidth of the first UE according to a situation in which the first PRACH resource meets the configuration condition of the PRACH resource in the first random access parameter. For example, the location of the frequency-domain resource of the first PRACH resource is the location of the frequency-domain resource of the PRACH resource included in the first random access parameter; the location of the time-domain resource of the first PRACH resource is the location of the time-domain resource of the PRACH resource included in the first random access parameter; or the location of the time-frequency resource of the first PRACH resource is the location of the time-frequency resource of the PRACH resource included in the first random access parameter.

In a second feasible implementation manner, the base station may determine the baseband processing bandwidth of the first UE according to a situation in which the first preamble meets the configuration condition of the preamble set in the first random access parameter. For example, the first preamble belongs to the preamble set indicated in the first random access parameter.

In a third feasible implementation manner, the base station may determine the baseband processing bandwidth of the first UE according to situations in which the first PRACH resource meets the configuration condition of the PRACH resource in the first random access parameter and the first preamble meets the configuration condition of the preamble set in the first random access parameter.

S308. The base station sends first information to the first UE according to the baseband processing bandwidth of the first UE.

In this embodiment, the specific implementation process in S308 is similar to the specific implementation process in S103 in Embodiment 1 of the method in the present invention. For details, reference may be made to related descriptions in the foregoing method embodiment, which are not described again in this embodiment of the present invention.

S309. The first UE receives the first information that is sent by the base station according to the baseband processing bandwidth of the first UE.

In this embodiment, the specific implementation process in S309 is similar to the specific implementation process in S202 in Embodiment 2 of the method in the present invention. For details, reference may be made to related descriptions in the foregoing method embodiment, which are not described again in this embodiment of the present invention.

According to the information transmission method provided in Embodiment 3 of the present invention, UE acquires a configuration condition of a PRACH resource and/or a configuration condition of a preamble set sent by a base station; the UE determines a first PRACH resource and a first preamble according to the configuration condition of the PRACH resource and/or the configuration condition of the preamble set; and the UE sends the first preamble to the base station according to the first PRACH resource. The base station determines baseband processing bandwidth of the UE according to a situation in which the first PRACH resource meets the configuration condition of the PRACH resource, and/or according to a situation in which the first preamble meets the configuration condition of the preamble set; and the base station sends first information to the UE according to the baseband processing bandwidth of the UE, where bandwidth occupied by a physical resource of the first information is less than or equal to the baseband processing bandwidth of the UE. Therefore, the UE can completely decode a PDSCH and acquire information sent by the base station, thereby ensuring a capability of the UE to receive data.

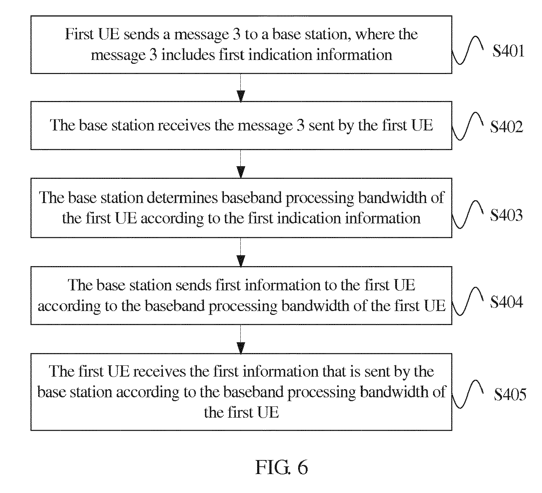

FIG. 6 is a flowchart of Embodiment 6 of an information transmission method according to the present invention. As shown in FIG. 6, the method in this embodiment may include the following steps:
S401. First UE sends a message 3 to a base station, where the message 3 includes first indication information.
5402. The base station receives the message 3 sent by the first UE.
S403. The base station determines baseband processing bandwidth of the first UE according to the first indication information.

In this embodiment, the first UE may report a type of UE to the base station by using the message 3 in a random access process, that is, the first UE reports baseband processing bandwidth of the UE, where the message 3 is a message 3 in the prior art, and the message 3 may be an RRC connection setup request message or a buffer status report. The message 3 includes first indication information, where the first indication information is used to indicate the baseband processing bandwidth of the UE. The base station acquires the first indication information in the message 3 according to the message 3, and determines the baseband processing bandwidth of the first UE according to the first indication information.

In a first feasible implementation manner, the message 3 in this embodiment is an RRC connection setup request message, the first indication information included in the message 3 is an RRC connection setup request reason in the RRC connection setup request message, and the RRC connection setup request reason is used to indicate the baseband processing bandwidth of the first UE.

In a second feasible implementation manner, the first indication information in the message 3 in this embodiment is a Media Access Control (Media Access Control, MAC for short) layer protocol data unit (Protocol Data Unit) header. The MAC layer PDU header is used to indicate the baseband processing bandwidth of the first UE. Optionally, the MAC layer PDU header includes a preset bit indicator, and the preset bit indicator is used to indicate the baseband processing bandwidth of the first UE. For example, a preset bit indicator 1 may indicate the baseband processing bandwidth of the first UE.

In a third feasible implementation manner, the first indication information in the message 3 in this embodiment is a preset Media Access Control MAC control element CE in the message 3, and the MAC CE is used to indicate the baseband processing bandwidth of the first UE. For example, a new MAC CE may be added to the message 3, where the newly added MAC CE may be used to indicate the baseband processing bandwidth of the first UE. Optionally, the MAC CE includes a preset logic channel identifier LCID, and the preset logic channel identifier is used to indicate the baseband processing bandwidth of the first UE. For example, an LCID value may be selected from reserved LCID values to indicate the baseband processing bandwidth of the first UE.

S404. The base station sends first information to the first UE according to the baseband processing bandwidth of the first UE.

In this embodiment, the specific implementation process in S404 is similar to the specific implementation process in S103 in Embodiment 1 of the method in the present invention. For details, reference may be made to related descriptions in the foregoing method embodiment, which are not described again in this embodiment of the present invention.

S405. The first UE receives the first information that is sent by the base station according to the baseband processing bandwidth of the first UE.

In this embodiment, the specific implementation process in S405 is similar to the specific implementation process in S202 in Embodiment 2 of the method in the present invention. For details, reference may be made to related descriptions in the foregoing method embodiment, which are not described again in this embodiment of the present invention.

According to the information transmission method provided in Embodiment 4 of the present invention, first UE sends a message 3 to a base station; the base station determines baseband processing bandwidth of the first UE according to first indication information in the message 3; and the base station sends first information to the first UE according to the baseband processing bandwidth of the first UE, where bandwidth occupied by a physical resource of the first information is less than or equal to baseband processing bandwidth of UE. Therefore, the UE can completely decode a PDSCH and acquire information sent by the base station, thereby ensuring a capability of the UE to receive data.

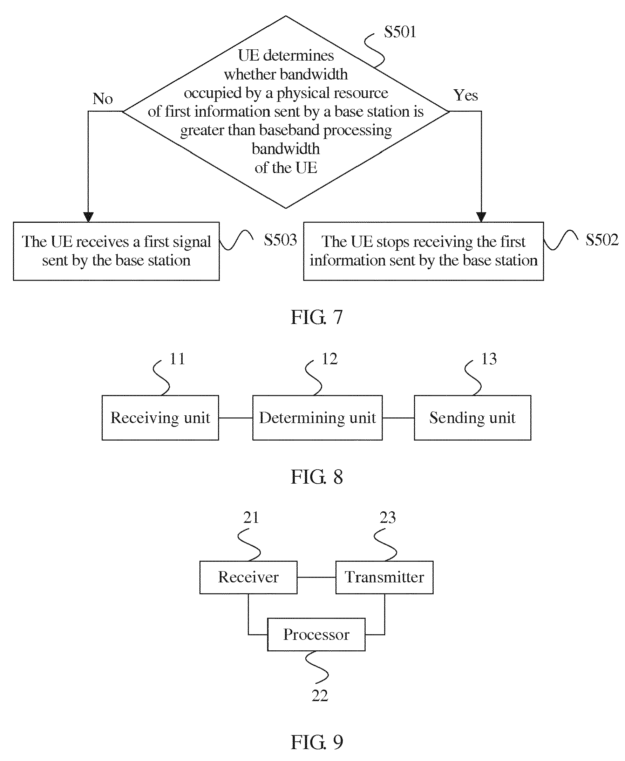

FIG. 7 is a flowchart of Embodiment 5 of an information transmission method according to the present invention. As shown in FIG. 7, the method in this embodiment may include the following steps:
S501. UE determines whether bandwidth occupied by a physical resource of first information sent by a base station is greater than baseband processing bandwidth of the UE. If yes, S502 is performed; if no, S503 is performed.

In this embodiment, the UE may determine whether the bandwidth occupied by the physical resource of the first information sent by the base station is greater than the baseband processing bandwidth of the UE, where the first information is information sent by the base station through a PDSCH, such as data, a RAR, or another signaling. If the UE determines that the bandwidth occupied by the physical resource of the first information sent by the base station is greater than the baseband processing bandwidth of the UE, it indicates that the UE cannot completely receive the first information sent by the base station, which affects information receiving performed by the UE. Therefore, the UE may perform S602. If the UE determines that the bandwidth occupied by the physical resource of the first information sent by the base station is not greater than the baseband processing bandwidth of the UE, it indicates that the UE can completely receive the first information sent by the base station. Therefore, the UE may perform S603.

Optionally, before the UE determines whether the bandwidth occupied by the physical resource of the first information sent by the base station is greater than the baseband processing bandwidth of the UE, the method further includes: receiving, by the UE, downlink control information (Downlink Control Information, DCI for short) sent by the base station, where the DCI is used to schedule the physical resource of the first information; and determining, by the UE according to the DCI, bandwidth occupied by a physical resource of a first signal. The DCI may be received by the UE through a PDCCH or through an EPDCCH.

S502. The UE stops receiving the first information sent by the base station.

In this embodiment, if the UE determines that the bandwidth occupied by the physical resource of the first information sent by the base station is greater than the baseband processing bandwidth of the UE, the UE cannot completely decode a PDSCH signal and acquire the first information sent by the base station; therefore the UE may choose to stop receiving the first information sent by the base station. Because the UE does not receive information, information received by the UE is not affected.

Optionally, that the UE stops receiving the first information sent by the base station includes: if the UE has received a first part of the first information, discarding, by the UE, the first part of the first information; and stopping receiving, by the UE, a second part of the first information except the first part of the first information. Specifically, after receiving the DCI, the UE begins to receive a PDSCH signal that bears the first information and that is scheduled by the DCI, and caches the received PDSCH signal. When the UE determines, according to the DCI, that the bandwidth occupied by the physical resource of the first information is greater than the baseband processing bandwidth of the UE, and the UE has received all PDSCH signals that bear the first information, the UE directly discards all the cached PDSCH signals that bear the first information, so that the UE does not receive the first signal sent by the base station. Alternatively, when the UE determines, according to the DCI, that the bandwidth occupied by the physical resource of the first information is greater than the baseband processing bandwidth of the UE, and the UE has received a part of PDSCH signals that bear the first information, the UE directly discards the part of the cached PDSCH signals that bear the first information, and then stops receiving and caching another part of the PDSCH signals that bear the first information, so that the UE does not receive the first signal sent by the base station. That is, if PDSCH data scheduled by a PDCCH or an EPDCCH is not received and cached, the UE does not receive and cache the PDSCH data scheduled by the PDCCH or the EPDCCH; if a part of or all of the PDSCH data scheduled by the PDCCH or the EPDCCH has been received and cached, the received and cached PDSCH data scheduled by the PDCCH or the EPDCCH is discarded.

S503. The UE receives a first signal sent by the base station.

In this embodiment, if the UE determines that the bandwidth occupied by the physical resource of the first information sent by the base station is not greater than the baseband processing bandwidth of the UE, the UE can completely decode the PDSCH signal and acquire the first information sent by the base station, so that the UE can receive the first signal sent by the base station.

According to the information transmission method provided in Embodiment 5 of the present invention, UE determines whether bandwidth occupied by a physical resource of first information sent by a base station is greater than baseband processing bandwidth of the UE, and if yes, the UE stops receiving the first information sent by the base station, so as to define a processing manner after the UE receives a first signal. Because the UE does not receive the first information sent by the base station, a capability of the UE to receive information is not affected.

FIG. 8 is a schematic structural diagram of Embodiment 1 of a base station according to the present invention. As shown in FIG. 8, the base station in this embodiment may include: a receiving unit 11, a determining unit 12, and a sending unit 13, where the receiving unit 11 is configured to receive first indication information sent by first user equipment UE, where the first indication information is used to indicate baseband processing bandwidth of the first UE, and the baseband processing bandwidth of the first UE is less than or equal to preset bandwidth; the determining unit 12 is configured to determine the baseband processing bandwidth of the first UE according to the first indication information; and the sending unit 13 is configured to send first information to the first UE according to the baseband processing bandwidth of the first UE, where the first information is information sent by the base station to the first UE through a physical downlink shared channel PDSCH, and bandwidth occupied by a physical resource of the first information is less than or equal to the baseband processing bandwidth of the first UE.

The base station in this embodiment may be configured to execute the technical solutions of the foregoing method embodiment of the present invention, and an implementation principle and a technical effect of the technical solutions are similar. For details, reference may be made to related descriptions in the foregoing method embodiment, which are not described herein again.

In Embodiment 2 of a base station according to the present invention, the base station in this embodiment is on a basis of a structure of the base station shown in FIG. 8. Further, in a first feasible implementation manner, the receiving unit 11 is specifically configured to receive, on a first physical random access channel PRACH resource, the first preamble sent by the first UE, where the first PRACH resource and/or the first preamble are/is used to indicate the baseband processing bandwidth of the first UE; and the determining unit 12 is specifically configured to determine the baseband processing bandwidth of the first UE according to the first PRACH resource and/or the first preamble.

Optionally, the sending unit 13 is further configured to: before the receiving unit 11 receives, on the first physical random access channel PRACH resource, the first preamble sent by the first UE, send a first random access parameter to at least one UE, where the at least one UE includes the first UE, the first random access parameter includes second indication information, a configuration condition of a PRACH resource and/or a configuration condition of a preamble set, the second indication information is used to instruct the first UE to acquire the configuration condition of the PRACH resource and/or the configuration condition of the preamble set in the first random access parameter, and the preamble set includes at least one preamble; the determining unit 12 is specifically configured to determine the baseband processing bandwidth of the first UE according to a situation in which the first PRACH resource meets the configuration condition of the PRACH resource in the first random access parameter; and/or determine the baseband processing bandwidth of the first UE according to a situation in which the first preamble meets the configuration condition of the preamble set in the first random access parameter.

Optionally, the configuration condition of the preamble set is a quantity of preambles and/or a preamble identifier of the preamble set.

Optionally, the configuration condition of the PRACH resource includes a location of a time-frequency resource of the PRACH resource, a location of a time-domain resource of the PRACH resource, or a location of a frequency-domain resource of the PRACH resource.

In a second feasible implementation manner, the receiving unit 11 is specifically configured to receive a message 3 sent by the first UE, where the message 3 includes the first indication information.

Optionally, the first indication information is a Radio Resource Control RRC connection setup request reason, and the RRC connection setup request reason is used to indicate the baseband processing bandwidth of the first UE.

Optionally, the first indication information is a Media Access Control MAC layer protocol data unit PDU header in the message 3, and the MAC layer PDU header is used to indicate the baseband processing bandwidth of the first UE.

Optionally, the MAC layer PDU header includes a preset bit indicator, and the preset bit indicator is used to indicate the baseband processing bandwidth of the first UE.

Optionally, the first indication information is a preset Media Access Control MAC control element CE in the message 3, and the MAC CE is used to indicate the baseband processing bandwidth of the first UE.

Optionally, the MAC CE includes a preset logic channel identifier LCID, and the preset LCID is used to indicate the baseband processing bandwidth of the first UE.

The base station in this embodiment may be configured to execute the technical solutions of the foregoing method embodiment of the present invention, and an implementation principle and a technical effect of the technical solutions are similar. For details, reference may be made to related descriptions in the foregoing method embodiment, which are not described herein again.

FIG. 9 is a schematic structural diagram of Embodiment 3 of a base station according to the present invention. As shown in FIG. 9, the base station in this embodiment may include: a receiver 21, a processor 22, and a transmitter 23, where the processor 22 is configured to control the receiver 21 to receive first indication information sent by first user equipment UE, where the first indication information is used to indicate baseband processing bandwidth of the first UE, and the baseband processing bandwidth of the first UE is less than or equal to preset bandwidth; the processor 22 is configured to determine the baseband processing bandwidth of the first UE according to the first indication information; and the processor 22 is configured to control the transmitter 23 to send, according to the baseband processing bandwidth of the first UE, first information to the first UE, where the first information is information sent by the base station to the first UE through a physical downlink shared channel PDSCH, and bandwidth occupied by a physical resource of the first information is less than or equal to the baseband processing bandwidth of the first UE.

In a first feasible implementation manner, the processor 22 is specifically configured to control the receiver 21 to receive, on a first physical random access channel PRACH resource, the first preamble sent by the first UE, where the first PRACH resource and/or the first preamble are/is used to indicate the baseband processing bandwidth of the first UE; and the processor 22 is specifically configured to determine the baseband processing bandwidth of the first UE according to the first PRACH resource and/or the first preamble.

Optionally, the processor 22 is further configured to: before controlling the receiver 21 to receive, on the first physical random access channel PRACH resource, the first preamble sent by the first UE, control the transmitter 23 to send a first random access parameter to at least one UE, where the at least one UE includes the first UE, the first random access parameter includes second indication information, a configuration condition of a PRACH resource and/or a configuration condition of a preamble set, the second indication information is used to instruct the first UE to acquire the configuration condition of the PRACH resource and/or the configuration condition of the preamble set in the first random access parameter, and the preamble set includes at least one preamble; and the processor 22 is specifically configured to determine the baseband processing bandwidth of the first UE according to a situation in which the first PRACH resource meets the configuration condition of the PRACH resource in the first random access parameter; and/or determine the baseband processing bandwidth of the first UE according to a situation in which the first preamble meets the configuration condition of the preamble set in the first random access parameter.

Optionally, the configuration condition of the preamble set is a quantity of preambles and/or a preamble identifier of the preamble set.

Optionally, the configuration condition of the PRACH resource includes a location of a time-frequency resource of the PRACH resource, a location of a time-domain resource of the PRACH resource, or a location of a frequency-domain resource of the PRACH resource.

In a second feasible implementation manner, the processor 22 is specifically configured to control the receiver 21 to receive a message 3 sent by the first UE, where the message 3 includes the first indication information.

Optionally, the first indication information is a Radio Resource Control RRC connection setup request reason, and the RRC connection setup request reason is used to indicate the baseband processing bandwidth of the first UE.

Optionally, the first indication information is a Media Access Control MAC layer protocol data unit PDU header in the message 3, and the MAC layer PDU header is used to indicate the baseband processing bandwidth of the first UE.

Optionally, the MAC layer PDU header includes a preset bit indicator, and the preset bit indicator is used to indicate the baseband processing bandwidth of the first UE.

Optionally, the first indication information is a preset Media Access Control MAC control element CE in the message 3, and the MAC CE is used to indicate the baseband processing bandwidth of the first UE.

Optionally, the MAC CE includes a preset logic channel identifier LCID, and the preset LCID is used to indicate the baseband processing bandwidth of the first UE.

The base station in this embodiment may be configured to execute the technical solutions of the foregoing method embodiment of the present invention, and an implementation principle and a technical effect of the technical solutions are similar. For details, reference may be made to related descriptions in the foregoing method embodiment, which are not described herein again.

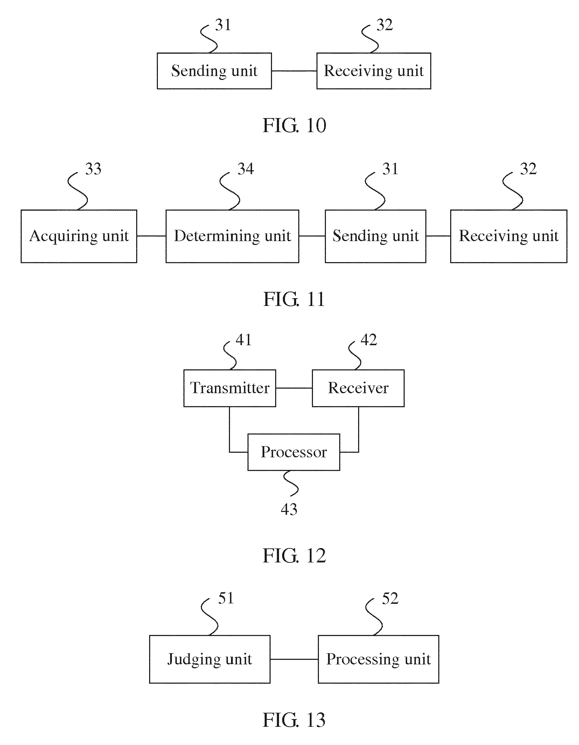

FIG. 10 is a schematic structural diagram of Embodiment 1 of UE according to the present invention. As shown in FIG. 10, the UE in this embodiment may include: a sending unit 31 and a receiving unit 32, where the sending unit 31 is configured to send first indication information to the base station, where the first indication information is used to indicate baseband processing bandwidth of the UE, and the baseband processing bandwidth of the UE is less than or equal to preset bandwidth; and the receiving unit 32 is configured to receive first information that is sent by the base station according to the baseband processing bandwidth of the UE, where the first information is information sent by the base station through a physical downlink shared channel PDSCH, and bandwidth occupied by a physical resource of the first information is less than or equal to the baseband processing bandwidth of the UE.

The UE in this embodiment may be configured to execute the technical solutions of the foregoing method embodiment of the present invention, and an implementation principle and a technical effect of the technical solutions are similar. For details, reference may be made to related descriptions in the foregoing method embodiment, which are not described herein again.

FIG. 11 is a schematic structural diagram of Embodiment 2 of UE according to the present invention. As shown in FIG. 11, the UE in this embodiment is on a basis of a structure of the UE shown in FIG. 10. Further, in a first feasible implementation manner, the sending unit 31 is specifically configured to send, on a first physical random access channel PRACH resource, a first preamble to the base station, where the first PRACH resource and/or the first preamble are/is used to indicate the baseband processing bandwidth of the UE.

Optionally, the UE in this embodiment may further include: an acquiring unit 33 and a determining unit 34; where the receiving unit 32 is further configured to: before the sending unit 31 sends the first indication information to the base station, receive a first random access parameter sent by the base station, where the first random access parameter includes second indication information, a configuration condition of a PRACH resource and/or a configuration condition of a preamble set, the second indication information is used to instruct the first UE to acquire the configuration condition of the PRACH resource and/or the configuration condition of the preamble set in the first random access parameter, and the preamble set includes at least one preamble; the acquiring unit 33 is configured to acquire the configuration condition of the PRACH resource and/or the configuration condition of the preamble set in the first random access parameter; and the determining unit 34 is configured to: before the sending unit 31 sends, on the first physical random access channel PRACH resource, the first preamble to the base station, determine the first PRACH resource and the first preamble according to the first random access parameter, where the first PRACH resource meets the configuration condition of the PRACH resource in the first random access parameter, and the first preamble meets the configuration condition of the preamble set in the first random access parameter.

Optionally, the configuration condition of the preamble set is a quantity of preambles and/or a preamble set identifier of the preamble set.

Optionally, the configuration condition of the PRACH resource includes a location of a time-frequency resource of the PRACH resource, a location of a time-domain resource of the PRACH resource, or a location of a frequency-domain resource of the PRACH resource.

In a second feasible implementation manner, the sending unit 31 is specifically configured to send a message 3 to the base station, where the message 3 includes the first indication information.

Optionally, the first indication information is a Radio Resource Control RRC connection setup request reason, and the RRC connection setup request reason is used to indicate the baseband processing bandwidth of the UE.

Optionally, the first indication information is a Media Access Control MAC layer protocol data unit PDU header in the message 3, and the MAC layer PDU header is used to indicate the baseband processing bandwidth of the UE.

Optionally, the MAC layer PDU header includes a preset bit indicator, and the preset bit indicator is used to indicate the baseband processing bandwidth of the UE.

Optionally, the first indication information is a preset Media Access Control MAC control element CE in the message 3, and the MAC CE is used to indicate the baseband processing bandwidth of the UE.

Optionally, the MAC CE includes a preset logic channel identifier, and the preset logic channel identifier is used to indicate the baseband processing bandwidth of the UE.

The UE in this embodiment may be configured to execute the technical solutions of the foregoing method embodiment of the present invention, and an implementation principle and a technical effect of the technical solutions are similar. For details, reference may be made to related descriptions in the foregoing method embodiment, which are not described herein again.

FIG. 12 is a schematic structural diagram of Embodiment 3 of UE according to the present invention. As shown in FIG. 12, the UE in this embodiment may include: a transmitter 41, a receiver 42, and a processor 43, where the processor 43 is configured to control the transmitter 41 to send first indication information to the base station, where the first indication information is used to indicate baseband processing bandwidth of the UE, and the baseband processing bandwidth of the UE is less than or equal to preset bandwidth; and the processor 43 is configured to control the receiver 42 to receive first information that is sent by the base station according to the baseband processing bandwidth of the UE, where the first information is information sent by the base station through a physical downlink shared channel PDSCH, and bandwidth occupied by a physical resource of the first information is less than or equal to the baseband processing bandwidth of the UE.

Further, in a first feasible implementation manner, the processor 43 is specifically configured to control the transmitter 41 to send, on a first physical random access channel PRACH resource, a first preamble to the base station, where the first PRACH resource and/or the first preamble are/is used to indicate the baseband processing bandwidth of the UE.

Optionally, the processor 43 is further configured to: before controlling the transmitter 41 to send the first indication information to the base station, control the receiver 42 to receive a first random access parameter sent by the base station, where the first random access parameter includes second indication information, a configuration condition of a PRACH resource and/or a configuration condition of a preamble set, the second indication information is used to instruct the first UE to acquire the configuration condition of the PRACH resource and/or the configuration condition of the preamble set in the first random access parameter, and the preamble set includes at least one preamble. The processor 43 is further configured to acquire the configuration condition of the PRACH resource and/or the configuration condition of the preamble set in the first random access parameter; and before controlling the transmitter 41 to send, on the first physical random access channel PRACH resource, the first preamble to the base station, determine the first PRACH resource and the first preamble according to the first random access parameter, where the first PRACH resource meets the configuration condition of the PRACH resource in the first random access parameter, and the first preamble meets the configuration condition of the preamble set in the first random access parameter.

Optionally, the configuration condition of the preamble set is a quantity of preambles and/or a preamble set identifier of the preamble set.

Optionally, the configuration condition of the PRACH resource includes a location of a time-frequency resource of the PRACH resource, a location of a time-domain resource of the PRACH resource, or a location of a frequency-domain resource of the PRACH resource.

In a second feasible implementation manner, the processor 43 is specifically configured to control the transmitter 41 to send a message 3 to the base station, where the message 3 includes the first indication information.

Optionally, the first indication information is a Radio Resource Control RRC connection setup request reason, and the RRC connection setup request reason is used to indicate the baseband processing bandwidth of the UE.

Optionally, the first indication information is a Media Access Control MAC layer protocol data unit PDU header in the message 3, and the MAC layer PDU header is used to indicate the baseband processing bandwidth of the UE.

Optionally, the MAC layer PDU header includes a preset bit indicator, and the preset bit indicator is used to indicate the baseband processing bandwidth of the UE.

Optionally, the first indication information is a preset Media Access Control MAC control element CE in the message 3, and the MAC CE is used to indicate the baseband processing bandwidth of the UE.

Optionally, the MAC CE includes a preset logic channel identifier, and the preset logic channel identifier is used to indicate the baseband processing bandwidth of the UE.

The UE in this embodiment may be configured to execute the technical solutions of the foregoing method embodiment of the present invention, and an implementation principle and a technical effect of the technical solutions are similar. For details, reference may be made to related descriptions in the foregoing method embodiment, which are not described herein again.

FIG. 13 is a schematic structural diagram of Embodiment 4 of UE according to the present invention. As shown in FIG. 13, the UE in this embodiment may include: a judging unit 51 and a processing unit 52, where the judging unit 51 is configured to determine whether bandwidth occupied by a physical resource of first information sent by a base station is greater than baseband processing bandwidth of the UE, where the first information is information sent by the base station through a physical downlink shared channel PDSCH; and the processing unit 52 is configured to: if the judging unit 51 determines that the bandwidth occupied by the physical resource of the first information sent by the base station is greater than the baseband processing bandwidth of the UE, stop receiving the first information sent by the base station.

The UE in this embodiment may be configured to execute the technical solutions of the foregoing method embodiment of the present invention, and an implementation principle and a technical effect of the technical solutions are similar. For details, reference may be made to related descriptions in the foregoing method embodiment, which are not described herein again.

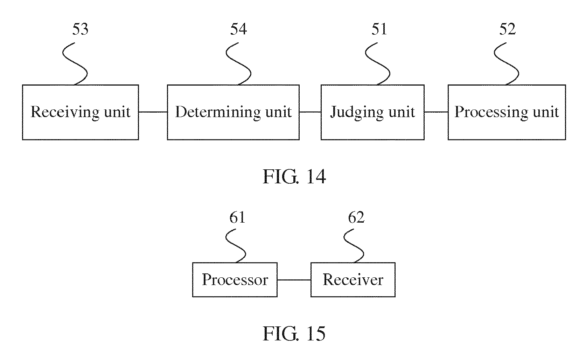

FIG. 14 is a schematic structural diagram of Embodiment 5 of UE according to the present invention. As shown in FIG. 14, on a basis of a structure of the UE shown in FIG. 13, the UE in this embodiment further includes: a receiving unit 53 and a determining unit 54, where the receiving unit 53 is configured to: before the judging unit 51 determines whether the bandwidth occupied by the physical resource of the first information sent by the base station is greater than the baseband processing bandwidth of the UE, receive downlink control information DCI sent by the base station, where the DCI is used to schedule the physical resource of the first information; and the determining unit 54 is configured to determine, according to the DCI, bandwidth occupied by a physical resource of the first signal.

Optionally, the processing unit 52 is specifically configured to: if the UE has received a first part of the first information, discard the first part of the first information; and stop receiving a second part of the first information except the first part of the first information.

The UE in this embodiment may be configured to execute the technical solutions of the foregoing method embodiment of the present invention, and an implementation principle and a technical effect of the technical solutions are similar. For details, reference may be made to related descriptions in the foregoing method embodiment, which are not described herein again.

FIG. 15 is a schematic structural diagram of Embodiment 6 of UE according to the present invention. As shown in FIG. 15, the UE in this embodiment may include: a processor 61 and a receiver 62, where the processor 61 is configured to determine whether bandwidth occupied by a physical resource of first information sent by a base station is greater than baseband processing bandwidth of the UE, where the first information is information sent by the base station through a physical downlink shared channel PDSCH; and if determining that the bandwidth occupied by the physical resource of the first information sent by the base station is greater than the baseband processing bandwidth of the UE, stop receiving the first information sent by the base station.

Optionally, the processor 61 is further configured to: before determining whether the bandwidth occupied by the physical resource of the first information sent by the base station is greater than the baseband processing bandwidth of the UE, control the receiver 62 to receive downlink control information DCI sent by the base station, where the DCI is used to schedule the physical resource of the first information; and the processor 61 is further configured to determine, according to the DCI, bandwidth occupied by a physical resource of the first signal.

Optionally, the processor 61 is specifically configured to: if the UE has received a first part of the first information, discard the first part of the first information; and stop receiving a second part of the first information except the first part of the first information.

The UE in this embodiment may be configured to execute the technical solutions of the foregoing method embodiment of the present invention, and an implementation principle and a technical effect of the technical solutions are similar. For details, reference may be made to related descriptions in the foregoing method embodiment, which are not described herein again.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An information transmission method, comprising:
receiving, by a base station, first indication information sent by first user equipment UE, wherein the first indication information is used to indicate baseband processing bandwidth of the first UE, and the baseband processing bandwidth of the first UE is less than or equal to preset bandwidth;
determining, by the base station, the baseband processing bandwidth of the first UE according to the first indication information; and
sending, by the base station, first information to the first UE according to the baseband processing bandwidth of the first UE, wherein the first information is information sent by the base station to the first UE through a physical downlink shared channel PDSCH, and bandwidth occupied by a physical resource of the first information is less than or equal to the baseband processing bandwidth of the first UE.

2. The method according to claim 1, wherein the receiving, by a base station, first indication information sent by first user equipment UE comprises:
receiving, by the base station on a first physical random access channel PRACH resource, the first preamble sent by the first UE, wherein the first PRACH resource and/or the first preamble are/is used to indicate the baseband processing bandwidth of the first UE; and
the determining, by the base station, the baseband processing bandwidth of the first UE according to the indication information comprises:
determining, by the base station, the baseband processing bandwidth of the first UE according to the first PRACH resource and/or the first preamble.

3. The method according to claim 2, before the receiving, by the base station on a first physical random access channel PRACH resource, the first preamble sent by the first UE, further comprising:
sending, by the base station, a first random access parameter to at least one UE, wherein the at least one UE comprises the first UE, the first random access parameter comprises second indication information, a configuration condition of a PRACH resource and/or a configuration condition of a preamble set, the second indication information is used to instruct the first UE to acquire the configuration condition of the PRACH resource and/or the configuration condition of the preamble set in the first random access parameter, and the preamble set comprises at least one preamble; and
the determining, by the base station, the baseband processing bandwidth of the first UE according to the first PRACH resource comprises:
determining, by the base station, the baseband processing bandwidth of the first UE according to a situation in which the first PRACH resource meets the configuration condition of the PRACH resource in the first random access parameter; and
the determining, by the base station, the baseband processing bandwidth of the first UE according to the first preamble comprises:
determining, by the base station, the baseband processing bandwidth of the first UE according to a situation in which the first preamble meets the configuration condition of the preamble set in the first random access parameter.

4. The method according to claim 3, wherein the configuration condition of the preamble set is a quantity of preambles and/or a preamble identifier of the preamble set.

5. The method according to claim 3, wherein the configuration condition of the PRACH resource comprises a location of a time-frequency resource of the PRACH resource, a location of a time-domain resource of the PRACH resource, or a location of a frequency-domain resource of the PRACH resource.

6. The method according to claim 1, wherein the receiving, by a base station, first indication information sent by first user equipment UE comprises:
receiving, by the base station, a message 3 sent by the first UE, wherein the message 3 comprises the first indication information.

7. The method according to claim 6, wherein the first indication information is a Radio Resource Control RRC connection setup request reason, and the RRC connection setup request reason is used to indicate the baseband processing bandwidth of the first UE.

8. The method according to claim 6, wherein the first indication information is a Media Access Control MAC layer protocol data unit PDU header in the message 3, and the MAC layer PDU header is used to indicate the baseband processing bandwidth of the first UE.

9. The method according to claim 8, wherein the MAC layer PDU header comprises a preset bit indicator, and the preset bit indicator is used to indicate the baseband processing bandwidth of the first UE.

10. The method according to claim 6, wherein the first indication information is a preset Media Access Control MAC control element CE in the message 3, and the MAC CE is used to indicate the baseband processing bandwidth of the first UE.

11. The method according to claim 10, wherein the MAC CE comprises a preset logic channel identifier LCID, and the preset LCID is used to indicate the baseband processing bandwidth of the first UE.

12. An information transmission method, comprising:
sending, by user equipment UE, first indication information to the base station, wherein the first indication information is used to indicate baseband processing bandwidth of the UE, and the baseband processing bandwidth of the UE is less than or equal to preset bandwidth; and
receiving, by the UE, first information that is sent by the base station according to the baseband processing bandwidth of the UE, wherein the first information is information sent by the base station through a physical downlink shared channel PDSCH, and bandwidth occupied by a physical resource of the first information is less than or equal to the baseband processing bandwidth of the UE.

13. The method according to claim 12, wherein the sending, by user equipment UE, first indication information to the base station comprises:
sending, by the UE on a first physical random access channel PRACH resource, a first preamble to the base station, wherein the first PRACH resource and/or the first preamble are/is used to indicate the baseband processing bandwidth of the UE.

14. The method according to claim 13, before the sending, by user equipment UE, first indication information to the base station, further comprising:
receiving, by the UE, a first random access parameter sent by the base station, wherein the first random access parameter comprises second indication information, a configuration condition of a PRACH resource and/or a configuration condition of a preamble set, the second indication information is used to instruct the first UE to acquire the configuration condition of the PRACH resource and/or the configuration condition of the preamble set in the first random access parameter, and the preamble set comprises at least one preamble; and
acquiring, by the UE, the configuration condition of the PRACH resource and/or the configuration condition of the preamble set in the first random access parameter; and
before the sending, by the UE on a first physical random access channel PRACH resource, a first preamble to the base station, further comprising:
determining, by the UE, the first PRACH resource and the first preamble according to the first random access parameter, wherein the first PRACH resource meets the configuration condition of the PRACH resource in the first random access parameter; and the first preamble meets the configuration condition of the preamble set in the first random access parameter.

15. The method according to claim 14, wherein the configuration condition of the preamble set is a quantity of preambles and/or a preamble set identifier of the preamble set.

16. The method according to claim 14, wherein the configuration condition of the PRACH resource comprises a location of a time-frequency resource of the PRACH resource, a location of a time-domain resource of the PRACH resource, or a location of a frequency-domain resource of the PRACH resource.

17. The method according to claim 12, wherein the sending, by user equipment UE, first indication information to the base station comprises:
sending, by the UE, a message 3 to the base station, wherein the message 3 comprises the first indication information.

18. The method according to claim 17, wherein the first indication information is a Radio Resource Control RRC connection setup request reason, and the RRC connection setup request reason is used to indicate the baseband processing bandwidth of the UE.

19. The method according to claim 17, wherein the first indication information is a Media Access Control MAC layer protocol data unit PDU header in the message 3, and the MAC layer PDU header is used to indicate the baseband processing bandwidth of the UE.

20. The method according to claim 19, wherein the MAC layer PDU header comprises a preset bit indicator, and the preset bit indicator is used to indicate the baseband processing bandwidth of the UE.

21. The method according to claim 17, wherein the first indication information is a preset Media Access Control MAC control element CE in the message 3, and the MAC CE is used to indicate the baseband processing bandwidth of the UE.

22. The method according to claim 21, wherein the MAC CE comprises a preset logic channel identifier, and the preset logic channel identifier is used to indicate the baseband processing bandwidth of the UE.

23. An information transmission method, comprising:
determining, by user equipment UE, whether bandwidth occupied by a physical resource of first information sent by a base station is greater than baseband processing bandwidth of the UE, wherein the first information is information sent by the base station through a physical downlink shared channel PDSCH; and
if yes, stopping receiving, by the UE, the first information sent by the base station.

24. The method according to claim 23, before the determining, by user equipment UE, whether bandwidth occupied by a physical resource of first information sent by a base station is greater than baseband processing bandwidth of the UE, further comprising:
receiving, by the UE, downlink control information DCI sent by the base station, wherein the DCI is used to schedule the physical resource of the first information; and
determining, by the UE according to the DCI, bandwidth occupied by a physical resource of the first signal.

25. The method according to claim 23 or 24, wherein the stopping receiving, by the UE, the first information sent by the base station comprises:
if the UE has received a first part of the first information, discarding, by the UE, the first part of the first information; and
stopping receiving, by the UE, a second part of the first information except the first part of the first information.

26. Abase station, comprising:
a receiving unit, configured to receive first indication information sent by first user equipment UE, wherein the first indication information is used to indicate baseband processing bandwidth of the first UE, and the baseband processing bandwidth of the first UE is less than or equal to preset bandwidth;
a determining unit, configured to determine the baseband processing bandwidth of the first UE according to the first indication information; and
a sending unit, configured to send first information to the first UE according to the baseband processing bandwidth of the first UE, wherein the first information is information sent by the base station to the first UE through a physical downlink shared channel PDSCH, and bandwidth occupied by a physical resource of the first information is less than or equal to the baseband processing bandwidth of the first UE.

27. The base station according to claim 26, wherein the receiving unit is specifically configured to receive, on a first physical random access channel PRACH resource, the first preamble sent by the first UE, wherein the first PRACH resource and/or the first preamble are/is used to indicate the baseband processing bandwidth of the first UE; and
the determining unit is specifically configured to determine the baseband processing bandwidth of the first UE according to the first PRACH resource and/or the first preamble.

28. The base station according to claim 27, wherein the sending unit is further configured to: before the receiving unit receives, on the first physical random access channel PRACH resource, the first preamble sent by the first UE, send a first random access parameter to at least one UE, wherein the at least one UE comprises the first UE, the first random access parameter comprises second indication information, a configuration condition of a PRACH resource and/or a configuration condition of a preamble set, the second indication information is used to instruct the first UE to acquire the configuration condition of the PRACH resource and/or the configuration condition of the preamble set in the first random access parameter, and the preamble set comprises at least one preamble; and
the determining unit is specifically configured to determine the baseband processing bandwidth of the first UE according to a situation in which the first PRACH resource meets the configuration condition of the PRACH resource in the first random access parameter; and/or determine the baseband processing bandwidth of the first UE according to a situation in which the first preamble meets the configuration condition of the preamble set in the first random access parameter.

29. The base station according to claim 28, wherein the configuration condition of the preamble set is a quantity of preambles and/or a preamble identifier of the preamble set.

30. The base station according to claim 28, wherein the configuration condition of the PRACH resource comprises a location of a time-frequency resource of the PRACH resource, a location of a time-domain resource of the PRACH resource, or a location of a frequency-domain resource of the PRACH resource.

31. The base station according to claim 26, wherein the receiving unit is specifically configured to receive a message 3 sent by the first UE, wherein the message 3 comprises the first indication information.

32. The base station according to claim 31, wherein the first indication information is a Radio Resource Control RRC connection setup request reason, and the RRC connection setup request reason is used to indicate the baseband processing bandwidth of the first UE.

33. The base station according to claim 31, wherein the first indication information is a Media Access Control MAC layer protocol data unit PDU header in the message 3, and the MAC layer PDU header is used to indicate the baseband processing bandwidth of the first UE.

34. The base station according to claim 33, wherein the MAC layer PDU header comprises a preset bit indicator, and the preset bit indicator is used to indicate the baseband processing bandwidth of the first UE.

35. The base station according to claim 31, wherein the first indication information is a preset Media Access Control MAC control element CE in the message 3, and the MAC CE is used to indicate the baseband processing bandwidth of the first UE.

36. The base station according to claim 35, wherein the MAC CE comprises a preset logic channel identifier LCID, and the preset LCID is used to indicate the baseband processing bandwidth of the first UE.

37. User equipment UE, comprising:
a sending unit, configured to send first indication information to the base station, wherein the first indication information is used to indicate baseband processing bandwidth of the UE, and the baseband processing bandwidth of the UE is less than or equal to preset bandwidth; and
a receiving unit, configured to receive first information that is sent by the base station according to the baseband processing bandwidth of the UE, wherein the first information is information sent by the base station through a physical downlink shared channel PDSCH, and bandwidth occupied by a physical resource of the first information is less than or equal to the baseband processing bandwidth of the UE.

38. The UE according to claim 37, wherein the sending unit is specifically configured to send, on a first physical random access channel PRACH resource, a first preamble to the base station, wherein the first PRACH resource and/or the first preamble are/is used to indicate the baseband processing bandwidth of the UE.

39. The UE according to claim 38, further comprising: an acquiring unit and a determining unit; wherein
the receiving unit is further configured to: before the sending unit sends the first indication information to the base station, receive a first random access parameter sent by the base station, wherein the first random access parameter comprises second indication information, a configuration condition of a PRACH resource and/or a configuration condition of a preamble set, the second indication information is used to instruct the first UE to acquire the configuration condition of the PRACH resource and/or the configuration condition of the preamble set in the first random access parameter, and the preamble set comprises at least one preamble;
the acquiring unit is configured to acquire the configuration condition of the PRACH resource and/or the configuration condition of the preamble set in the first random access parameter; and
the determining unit is configured to: before the sending unit sends, on the first physical random access channel PRACH resource, the first preamble to the base station, determine the first PRACH resource and the first preamble according to the first random access parameter, wherein the first PRACH resource meets the configuration condition of the PRACH resource in the first random access parameter, and the first preamble meets the configuration condition of the preamble set in the first random access parameter.

40. The UE according to claim 39, wherein the configuration condition of the preamble set is a quantity of preambles and/or a preamble set identifier of the preamble set.

41. The UE according to claim 39, wherein the configuration condition of the PRACH resource comprises a location of a time-frequency resource of the PRACH resource, a location of a time-domain resource of the PRACH resource, or a location of a frequency-domain resource of the PRACH resource.

42. The UE according to claim 38, wherein the sending unit is specifically configured to send a message 3 to the base station, wherein the message 3 comprises the first indication information.

43. The UE according to claim 42, wherein the first indication information is a Radio Resource Control RRC connection setup request reason, and the RRC connection setup request reason is used to indicate the baseband processing bandwidth of the UE.

44. The UE according to claim 42, wherein the first indication information is a Media Access Control MAC layer protocol data unit PDU header in the message 3, and the MAC layer PDU header is used to indicate the baseband processing bandwidth of the UE.

45. The UE according to claim 44, wherein the MAC layer PDU header comprises a preset bit indicator, and the preset bit indicator is used to indicate the baseband processing bandwidth of the UE.

46. The UE according to claim 42, wherein the first indication information is a preset Media Access Control MAC control element CE in the message 3, and the MAC CE is used to indicate the baseband processing bandwidth of the UE.

47. The UE according to claim 46, wherein the MAC CE comprises a preset logic channel identifier, and the preset logic channel identifier is used to indicate the baseband processing bandwidth of the UE.

48. User equipment UE, comprising:
a judging unit, configured to determine whether bandwidth occupied by a physical resource of first information sent by a base station is greater than baseband processing bandwidth of the UE, wherein the first information is information sent by the base station through a physical downlink shared channel PDSCH; and
a processing unit, configured to: if the judging unit determines that the bandwidth occupied by the physical resource of the first information sent by the base station is greater than the baseband processing bandwidth of the UE, stop receiving the first information sent by the base station.

49. The UE according to claim 48, further comprising:
a receiving unit, configured to: before the judging unit determines whether the bandwidth occupied by the physical resource of the first information sent by the base station is greater than the baseband processing bandwidth of the UE, receive downlink control information DCI sent by the base station, wherein the DCI is used to schedule the physical resource of the first information; and
a determining unit, configured to determine bandwidth occupied by a physical resource of the first signal according to the DCI.

50. The UE according to claim 48 or 49, wherein the processing unit is specifically configured to: if the UE has received a first part of the first information, discard the first part of the first information; and stop receiving a second part of the first information except the first part of the first information.
